# EUROPÄISCHE PATENTANMELDUNG

(11) **EP 0 569 748 A2**
(43) Veröffentlichungstag der Anmeldung: **18.11.1993**
(21) Anmeldenummer: 93106518.9
(22) Anmeldetag: 22.04.1993
(51) Int. Cl.: H01G 1/015, H01G 4/06, H01G 4/30

(54) **Kondensator für eine Schichtschaltung**

(30) Priorität: 12.05.1992 DE 4215632
(71) Anmelder: TELENORMA GMBH, D-60326 Frankfurt am Main (DE)
(72) Erfinder: Bittner, Herbert, W-6090 Rüsselsheim (DE); Klomann, Peter, W-6233 Kelkheim (DE)

(57) **Zusammenfassung**

Ein auf einem Substrat (1) aufgebrachter Kondensator weist eine erste Elektrode (2) und eine zweite Elektrode (3) auf, die nebeneinander auf dem Substrat aufgebracht sind. Die erste Elektrode (2) weist einen Anschluß (9) und die zweite Elektrode (3) weist einen Anschluß (10) auf. Über den beiden Elektroden (2, 3) sind, getrennt durch eine isolierende Schicht (4), eine dritte (5) bzw. eine vierte (6) Elektrode angeordnet, die durch einen elektrischen Leiter (7) miteinander verbunden sind. Ein derartiger Kondensator weist eine besonders hohe Spannungsfestigkeit auf.

## Beschreibung

Die Erfindung betrifft einen auf einem Substrat aufgebrachten Kondensator bestehend aus zwei durch eine elektrisch isolierdende Schicht getrennten, übereinander angeordneten, mit jeweils einem elektrischen Anschluß versehenen Elektroden, wobei die erste Elektrode direkt auf dem Substrat aufgebracht ist.

Ein derartiger Kondensator ist bereits bekannt. So wird in der EP-PS 0 123 457 ein Stecker mit integriertem Filter beschrieben, bei welchem eine Vielzahl von Kondensatoren auf einem gemeinsamen Substrat aufgebracht sind. Dabei ist die eine Elektrode direkt auf dem Keramik-Substrat aufgebracht und elektrisch an einer, für alle Kondensatoren gemeinsamen Masse-Leitung elektrisch angeschlossen. Über dieser ersten Elektrode befindet sich eine isolierende Schicht, auf welcher die zweite Elektrode des Kondensators fluchtend über der ersten Elektrode aufgebracht ist. Diese Elektrode ist elektrisch mit einer Kontaktfläche verbunden, welche zum Anschluß an einem Steckerstift dient.

Mit einer derartigen Anordnung lassen sich auf einfache Weise aus Kondensatoren bestehende Filter für Leitungen herstellen, die über einen Stecker geführt sind. Da die Dicke der zwischen den beiden Elektroden liegenden isolierenden Schicht begrenzt ist, läßt sich die Spannungsfestigkeit derart aufgebauter Kondensatoren nicht beliebig erhöhen.

Die Aufgabe der Erfindung besteht nun darin, einen Kondensator der eingangs genannten Art anzugeben, welcher eine erhöhte Spannungsfestigkeit aufweist.

Diese Aufgabe wird dadurch gelöst, daß neben der ersten Elektrode eine zweite Elektrode auf dem Substrat aufgebracht ist und daß oberhalb der ersten bzw. der zweiten Elektrode eine dritte bzw. eine vierte Elektrode angeordnet ist, wobei die dritte und die vierte Elektrode durch einen elektrischen Leiter miteinander verbunden sind.

Die erfindungsgemäße Lösung der Aufgabe stellt die einfachste Anordnung dar, da die Elektroden nur in zwei Ebenen angeordnet sind. Aufwendigere Lösungen, die das Problem ebenfalls lösen, könnten entweder darin bestehen, die Elektroden und isolierenden Schichten in mehreren übereinanderliegenden Ebenen anzuordnen oder die Rückseite des Substrats zusätzlich zur Anbringung von Elektroden heranzuziehen. Sämtliche genannten Lösungen erfordern jedoch einen erhöhten Fertigungsaufwand.

Vorteilhafte Weiterbildungen der Erfindung ergeben sich aus den Unteransprüchen.

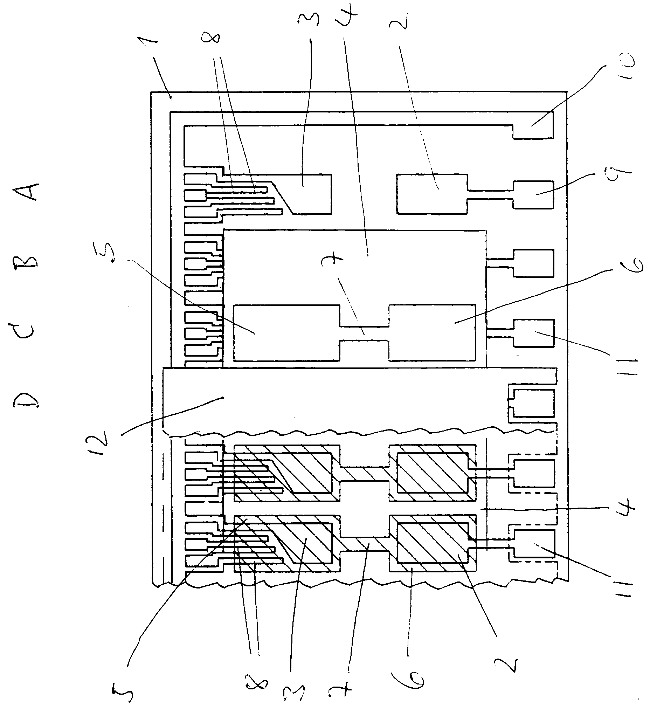

Die Erfindung wird anhand eines Ausführungsbeispiels näher erläutert, welches in der Zeichnung dargestellt ist. Zum besseren Verständnis des Aufbaus des Kondensators werden die einzelnen Lagen einzeln dargestellt, und zwar unter den Buchstaben A, B, C und D und anschließend auch in der übereinanderliegenden Anordnung. Dabei zeigt die Ebene A die auf dem Substrat 1 direkt aufgebrachten Elektroden 2 und 3, die Ebene B die Lage der isolierenden Schicht 4, die Ebene C die Elektroden 5 und 6 und die Ebene D, die darüberliegende Schutzschicht 12.

Auf dem Substrat 1 ist die Elektrode 2 aufgebracht, die mit der Kontaktfläche 11 ihres Anschlusses 9 elektrisch verbunden ist. In einigem Abstand von der Elektrode 2 ist die Elektrode 3 ebenfalls auf das Substrat 1 direkt aufgebracht und elektrisch mit dem gemeinsamen Anschluß 10 verbunden, dabei wird vorausgesetzt, daß eine Vielzahl von Kondensatoren auf dem Substrat 1 aufgebracht sind und deren Elektrode 3 mit dem gemeinsamen Anschluß 10 elektrisch verbunden sind. Die Elektrode 3 weist zusätzliche zungenförmige Teilflächen 8 auf, die zum Abgleich des Kapazitätswertes des Kondensators dienen, in dem mit Hilfe eines Laserstrahls die mit dem Anschluß 10 der Elektrode 3 verbundenen Teilflächen 8 einzeln abtrennbar sind. Ein derartiges Vorgehen ist bereits bekannt und wird in dem Buch "Hybridintegration, Technologie und Entwurf von Dickschichtschaltungen", Heidelberg 1986 auf Seite 245 beschrieben.

Auf die beiden Elektroden 2 und 3 und auch die Teilflächen 8 wird eine isolierende Schicht 4 aufgebracht, welche die beiden Elektroden 5 und 6 trägt, wobei deren Kontaktflächen fluchtend über den Kontaktflächen der Elektroden 2 und 3 angebracht sind. Die beiden Elektroden 5 und 6 sind durch einen elektrischen Leiter 7 miteinander verbunden. Nach dem Abgleich wird die ganze Anordnung mit einem Schutzüberzug 12 versehen, welcher die gesamte Oberseite des Substrats 1 mit Ausnahme der Kontaktflächen 11 überdeckt.

Bei dem in der Zeichnung dargestellten Ausführungsbeispiels wird davon ausgegangen, daß der die Kondensatoren tragende Dickschichtbaustein nicht gezeigte Anschlußstifte aufweist, welche elektrisch mit den Kontaktflächen 11 verbunden sind. Ein derart ausgebildeter Dickschichtbaustein läßt sich beispielsweise senkrecht auf einer Leiterplatte einsetzen.

Die Erfindung ist jedoch nicht nur auf einen derartigen Dickschichtbaustein beschränkt, vielmehr kann dieser auch derart ausgebildet sein, wie dies in der eingangs genannten EP-PS 0 123 457 beschrieben ist. In diesem Fall wäre das Substrat 1 im Bereich der Kontaktflächen 11 jeweils mit einer Bohrung versehen, durch welche ein Steckerstift hindurchragt, der mit der Kontaktfläche 11 elektrisch verbunden ist.

Bei dem Ausführungsbeispiel wurde von einem Dickschichtbaustein ausgegangen. Die Erfindung ist jedoch nicht auf eine derartige Anordnung beschränkt, vielmehr kann diese auch bei sogenannten Dünnschichtschaltungen angewendet werden.

## Patentansprüche

1. Auf einem Substrat aufgebrachter Kondensator bestehend aus zwei durch eine elektrisch isolierende Schicht getrennten, übereinander angeordneten, mit jeweils einem elektrischen Anschluß versehenen Elektroden, wobei die erste Elektrode direkt auf dem Substrat aufgebracht ist,
**dadurch gekennzeichnet,**
daß neben der ersten Elektrode (2) eine zweite Elektrode (3) auf dem Substrat (1) aufgebracht ist und daß oberhalb der ersten (2) bzw. der zweiten (3) Elektrode eine dritte (5) bzw. eine vierte (6) Elektrode angeordnet ist, wobei die dritte (5) und die vierte (6) Elektrode durch einen elektischen Leiter (7) miteinander verbunden sind.

2. Auf einem Substrat aufgebrachter Kondensator nach Anspruch 1,
dadurch gekennzeichnet,
daß die isolierende Schicht (4) über die Flächen der Elektroden (3,4,5,6) hinausragt und daß die Fläche der zweiten Elektrode (3) eine oder mehrere Teilflächen (8) aufweist, die außerhalb der isolierenden Schicht (4) mit dem Anschluß (10) dieser Elektrode (3) verbunden ist bzw. sind.

3. Auf einem Substrat aufgebrachter Kondensator nach einem der Ansprüche 1 oder 2,
**dadurch gekennzeichnet,**
daß eine Vielzahl von Kondensatoren auf einem gemeinsamen Substrat (1) aufgebracht sind und daß die zweiten Elektroden (3) einen gemeinsamen elektrischen Anschluß (10) aufweisen.

4. Auf einem Substrat aufgebrachter Kondensator nach Anspruch 3,
**dadurch gekennzeichnet,**
daß die erste Elektrode (2) mit einer Kontaktfläche (11) elektrisch verbunden ist, welche um eine Bohrung herum angeordnet ist.

5. Auf einem Substrat aufgebrachter Kondensator nach Anspruch 4,
**dadurch gekennzeichnet,**
daß durch die Bohrung ein Steckerstift oder Anschlußstift eines Steckers ragt und daß der Stecker oder Anschlußstift mit der Kontaktfläche (11) elektrisch verbunden ist.
